(19) Europäisches Patentamt
European Patent Office
Office européen des brevets

(11) **EP 4 749 939 A1**

(12) **EUROPEAN PATENT APPLICATION**

(43) Date of publication:
**27.05.2026   Bulletin 2026/22**

(21) Application number: **25217119.4**

(22) Date of filing: **19.11.2025**

(51) International Patent Classification (IPC):
***H04B 7/04*** (2017.01)

(52) Cooperative Patent Classification (CPC):
**H04B 7/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:   **25.11.2024   JP 2024204679**

(71) Applicant: **Hitachi, Ltd.**
**Tokyo 100-8280 (JP)**

(72) Inventors:
• **KIMURA, Hisatoshi**
**Tokyo, 100-8280 (JP)**

• **TANABE, Yosuke**
**Tokyo, 100-8280 (JP)**
• **FUNANE, Tsukasa**
**Tokyo, 100-8280 (JP)**
• **ITO, Makoto**
**Tokyo, 100-8280 (JP)**
• **WATANABE, Koichi**
**Tokyo, 100-8280 (JP)**

(74) Representative: **Mewburn Ellis LLP**
**Aurora Building**
**Counterslip**
**Bristol BS1 6BX (GB)**

(54) **RADIO WAVE GENERATING APPARATUS, RADIO WAVE DETECTING APPARATUS, AND RADIO WAVE TRANSMITTING AND RECEIVING SYSTEM**

(57)    An OAM radio wave transmitting and receiving system keeps an apparatus size from increasing by performing localized measurement of an OAM radio wave to acquire OAM radio wave information. A radio wave generating apparatus includes a controlling section and a radio wave transmitting section. The controlling section includes an OAM radio wave information setting section for generating a transmission radio wave signal according to an OAM mode order, a phase changing section for linearly changing a phase of the transmission radio wave signal over time depending on the OAM mode order, and a complex signal generating section for generating a complex signal from the transmission radio wave signal that has been changed in phase by the phase changing section and a reference signal. The radio wave transmitting section includes a complex signal converting section for breaking down a signal component of the complex signal into a real part and an imaginary part, a wireless processing section for generating a wireless signal from the signal component of the complex signal that has been broken down into the real part and the imaginary part, and an array antenna for transmitting the wireless signal as an OAM radio wave.

FIG. 1A

EP 4 749 939 A1

**Description**

BACKGROUND OF THE INVENTION

1. Field of the Invention

The present invention relates to a radio wave generating apparatus, a radio wave detecting apparatus, and a radio wave transmitting and receiving system.

2. Description of the Related Art

Radio waves are radiated by the accelerating motion of electrons, are absorbed and diffused by various atoms while being propagated, and induce emission of new radio waves. Since the radio waves on the occasions acquire various pieces of information owing to an exchange of momentums in the interaction of the radiation and objects, the radio waves are used in various applications including not only communication but also radar imaging and object detection, for example.

Radio waves have two kinds of angular momentum referred to as a spin angular momentum (SAM) and an orbital angular momentum (OAM). OAM has a theoretically infinite basis with regard to counterclockwise and clockwise directions of rotation of a helical azimuth angle phase and its rotational speed (OAM mode). Inasmuch as radio waves having different OAM modes are independent of each other, they can be multiplexed, thereby making OAM draw more attention. Attempts have been made to apply OAM to high-speed large-capacity optical communication, rotating object detection, and laser processing in the optical field and also to synthetic aperture radar (SAR) and object detection and recognition in the radio wave field.

JP-2018-67791-A discloses an OAM multiplex receiving apparatus that is aimed at minimizing the area of a reception antenna required to receive a plurality of OAM mode signals for increasing the reception SNR for a high-order OAM mode. The disclosed OAM multiplex receiving apparatus includes a plurality of antenna elements disposed in a pair of positions that are opposite to each other in phase, i.e., whose phase difference is 180 degrees, with regard to an odd-order OAM mode on a uniform annular pattern whose radius is larger as the signal intensity of an OAM mode is equal to or larger than a predetermined value and the absolute value of an order becomes larger, a plurality of antenna elements disposed in a pair of positions that are in phase with each other, i.e., whose phase difference is 0 degrees, with regard to an even-order OAM mode on the uniform annular pattern, a reception antenna including an antenna element disposed at the center of the uniform annular pattern with regard to the odd-order OAM mode, and combining means for combining reception signals from the pair of antenna elements in opposite phase to each other with regard to the odd-order OAM mode to output a signal in the odd-order OAM mode and combining reception signals from the pair of antenna elements in phase with each other with regard to the even-order OAM mode to output a signal in the even-order OAM mode.

Radio waves of OAM that have been transmitted from a transmitter can be received by a receiver that detects an OAM mode that is the same as that of the transmitter, and various pieces of information can be acquired, i.e., recovered, from the transmitted OAM radio waves. In a case where the OAM mode of a transmitter is unknown to a receiver, the receiver needs to detect the OAM mode of a received OAM radio wave and to process the received radio wave in the detected OAM mode. According to a process of detecting the OAM mode of a received OAM radio wave by a receiver, antenna elements disposed in a circular pattern may detect the components of respective vortexes of the OAM radio wave, and the receiver may measure the OAM mode of the OAM radio wave from the detected components.

The intensity distribution of an OAM radio wave is propagated in the shape of a spreading doughnut beam and tends to spread largely over a long distance. The above process of detecting the OAM mode of a received OAM radio wave is liable to give rise to an increase in the size of the reception facility and may not necessarily be easy to carry out because the diameter of the circular pattern needs to be commensurate with the diameter of the spreading doughnut beam. While the OAM multiplex receiving apparatus disclosed in JP-2018-67791-A measures the OAM mode of an OAM radio wave that has been propagated over a long distance with a spreading beam diameter by controlling the phase of signals from a plurality of antenna elements, the OAM multiplex receiving apparatus is disadvantageous in that it is large in size as it requires the plurality of antenna elements.

It is an object of the present invention to provide an OAM radio wave transmitting and receiving system that keeps an apparatus size from increasing by performing localized measurement of an OAM radio wave to acquire OAM radio wave information.

SUMMARY OF THE INVENTION

In accordance with an aspect of the present invention, there is provided a radio wave generating apparatus including a controlling section and a radio wave transmitting section, in which the controlling section includes an OAM radio wave information setting section for generating a transmission radio wave signal according to an OAM mode order, a phase changing section for linearly changing a phase of the transmission radio wave signal over time depending on the OAM mode order, and a complex signal generating section for generating a complex signal from the transmission radio wave signal that has been changed in phase by the phase changing section and a reference signal, and in which the radio wave transmitting section includes a complex signal converting section for breaking down a signal component of the complex signal into a real part and an imaginary part, a wireless processing section for generating a wireless signal from the signal component of the complex signal that has been broken down into the real part and the imaginary part, and an array antenna for transmitting the wireless signal as an OAM radio wave.

In accordance with another aspect of the present invention, there is provided a radio wave detecting apparatus including a radio wave receiving section and an operating section, in which the radio wave receiving section includes an antenna for receiving an OAM radio wave, a wireless processing section for reproducing the received OAM radio wave as a wireless signal, and a complex signal converting section for converting the reproduced wireless signal to a complex signal, and in which the operating section includes an OAM radio wave information calculating section for calculating an OAM mode order of the OAM radio wave from a frequency characteristic of the complex signal and a phase change coefficient representing a ratio at which a phase of the OAM radio wave has been changed depending on the OAM mode order at a time when the OAM radio wave has been transmitted.

According to the present invention, a localized portion of an OAM radio wave is measured to acquire OAM radio wave information, so that an OAM radio wave transmitting and receiving system can be provided without involving an increase in an apparatus size.

The above and other objects, configurations, and advantages of the present invention will become more apparent from the following description of preferred embodiments of the invention.

BRIEF DESCRIPTION OF THE DRAWINGS

FIG. 1A is a block diagram illustrating a configurational example of a transmitter according to a first embodiment of the present invention;
FIG. 1B is a diagram illustrating a circumferential angle according to the first embodiment;
FIG. 2A is a diagram illustrating a perceptive image of the propagation of an OAM radio wave according to the first embodiment;
FIG. 2B is a diagram illustrating a perceptive image of a receiver according to the first embodiment;
FIG. 3 is a block diagram illustrating a configurational example of the receiver according to the first embodiment;
FIG. 4 is a diagram illustrative of frequency spectrums of a signal received by the receiver according to the first embodiment;
FIG. 5 is a flowchart of a processing sequence of the transmitter according to the first embodiment;
FIG. 6 is a flowchart of a processing sequence of the receiver according to the first embodiment;
FIG. 7 is a diagram illustrating structured radio wave information according to the first embodiment;
FIG. 8 is a block diagram illustrating a configurational example of a transmitter according to a second embodiment of the present invention;
FIG. 9 is a block diagram illustrating a configurational example of a receiver according to the second embodiment;
FIG. 10 is a diagram illustrative of frequency spectrums of a signal received by the receiver according to the second embodiment;
FIG. 11 is a flowchart of a processing sequence of the transmitter according to the second embodiment;
FIG. 12 is a flowchart of a processing sequence of the receiver according to the second embodiment;
FIG. 13 is a diagram illustrating by way of example combinations of structured radio wave information and bit information according to the second embodiment;
FIG. 14 is a block diagram illustrating a configurational example of a transmitter according to a third embodiment of the present invention;
FIG. 15 is a block diagram illustrating a configurational example of a receiver according to the third embodiment;
FIG. 16 is a diagram illustrating an example of the calculation of the difference between pieces of structured radio wave information according to the third embodiment;
FIG. 17 is a diagram illustrating by way of example combinations of structured radio wave information and bit information according to the third embodiment; and
FIG. 18 is a diagram illustrating a method of receiving structured radio wave information according to a fourth embodiment of the present invention.

DESCRIPTION OF THE PREFERRED EMBODIMENTS

Preferred embodiments of the present invention will be described in detail below with reference to the drawings as necessary. The embodiments are detailed by way of illustrative example only and include certain omissions and simplifications required for better clarity as necessary. The present invention can be reduced to practice in other forms than the illustrated details according to the embodiments. Unless otherwise specified, each of the components described may be construed as single or plural in number. Throughout the embodiments, those components that are identically denominated have identical functions.

The position, size, shape, range, and the like of each of the components illustrated in each figure may not represent an actual position, size, shape, range, and the like for an easier understanding of the present invention. Consequently, the present invention may not necessarily be interpreted as being restricted to the position, size, shape, range, and the like that are actually illustrated in the figures.

While a processing operation may be described hereinafter as being performed by a program, a functional part, or the like acting as a main subject, it is performed by a piece of hardware such as a processor or an information processing apparatus, i.e., a computer, including such a processor. In the information processing apparatus, the processor appropriately executes programs read from a memory while using resources including the memory, a communication interface, and other devices. The processor may include a central processing unit (CPU) or a graphical processing unit (GPU), for example. Though processing operations for realizing functions can be performed by executing software programs, they may also be implemented by a dedicated circuit such as a field-programmable gate array (FPGA) or an application-specific integrated circuit (ASIC).

First embodiment:

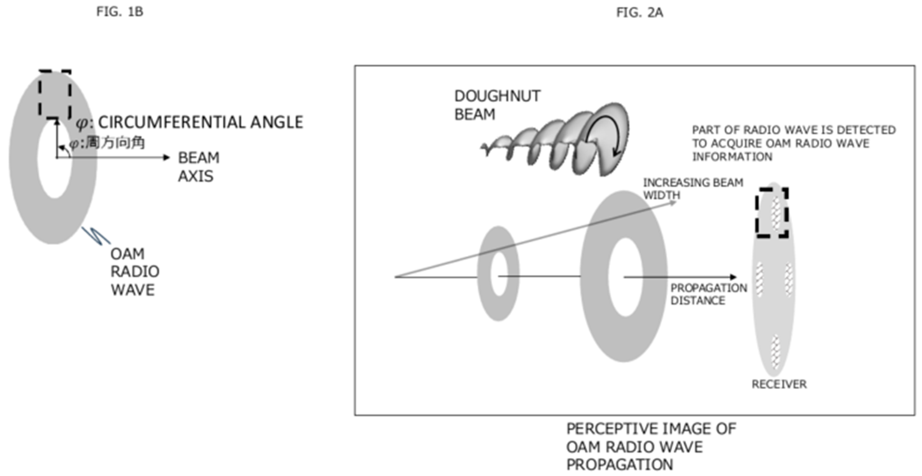

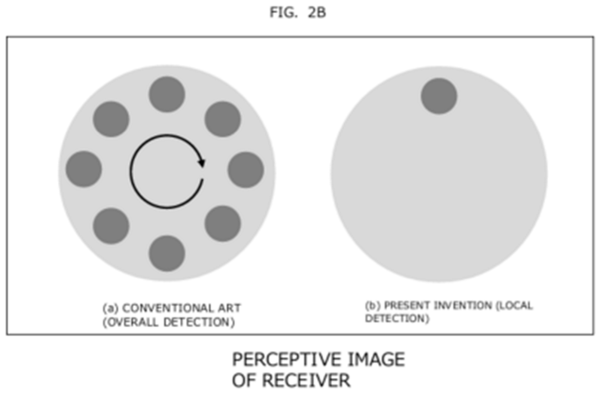

As illustrated in FIG. 2A, the intensity distribution of a radio wave having an OAM is propagated in the shape of a spreading doughnut beam and tends to spread largely over a long distance. Heretofore, it has been customary for antenna elements disposed in a circular pattern to detect the components of respective vortexes of the OAM radio wave and to measure OAM radio wave information from the detected components. When the radio wave is propagated over a long distance, however, the diameter of the circular pattern in which the antenna elements are disposed increases due to the spreading doughnut beam, making it difficult to measure OAM radio wave information. According to the present embodiment, OAM radio wave information can be acquired from localized detection of the OAM radio wave, as illustrated in FIG. 2B.

According to the present embodiment, a radio wave transmitting and receiving system includes a transmitter as a radio wave generating apparatus for transmitting an OAM radio wave corresponding to an OAM mode order that has been set and a receiver as a radio wave detecting apparatus for acquiring OAM radio wave information, i.e., an OAM mode order, from the frequency of a received signal.

Description regarding transmitter:

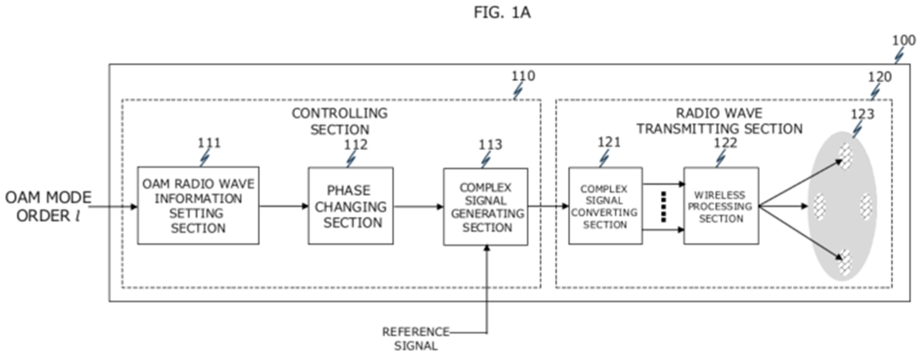

FIG. 1A illustrates in block form a configurational example of a transmitter 100 according to the first embodiment. As illustrated in FIG. 1A, the transmitter 100 includes a controlling section 110 and a radio wave transmitting section 120. The controlling section 110 includes an OAM radio wave information setting section 111 for generating an OAM transmission signal by setting OAM mode orders "±l" as OAM radio wave information, a phase changing section 112 for changing a transmission phase, i.e., an angular frequency, depending on the OAM mode orders that have been set, and a complex signal generating section 113 for generating a complex signal to be transmitted from the OAM transmission signal that has been changed in phase and a reference signal. The controlling section 110 may include an input device such as a keyboard, a mouse, or a touch panel, not depicted, for setting the OAM radio wave information and a display device, not depicted, such as a display device, for an operator to confirm contents of set information, for example, thereon.

The radio wave transmitting section 120 includes a complex signal converting section 121 for converting the complex signal that has been changed in phase to as many complex signals as the number of antenna elements, a wireless processing section 122 for converting the complex signals to a wireless signal, and a uniform circular array (UCA) antenna 123 having a plurality of antenna elements for outputting the wireless signal as a radio wave. The complex signal converting section 121 and the wireless processing section 122 are configured using the technology referred to as software defined radio (SDR) including an analog high-frequency circuit and a digital signal processor. Configurational details of the complex signal converting section 121 and the wireless processing section 122, and the like will be omitted from description.

Processing sequences of the controlling section 110, i.e., the OAM radio wave information setting section 111, the phase changing section 112, and the complex signal generating section 113, and the radio wave transmitting section 120, i.e., the complex signal converting section 121 and the wireless processing section 122, will be described below. The processing sequences of these sections may be carried out by a processor, i.e., a CPU, of a computer, not depicted, as it executes predetermined programs stored in a storage device, not depicted, or each of the processing sequences may be implemented by a dedicated CPU or piece of hardware, for example.

OAM radio wave information setting section 111:

The OAM radio wave information setting section 111 accepts OAM mode orders (±l) of an OAM radio wave to be transmitted and generates an OAM radio wave signal according to the following equation (1):

$$e^{jl\varphi} \qquad \ldots (1)$$

Of the equation (±l), "l" represents an OAM mode order, and the positive and negative signs represent counterclockwise and clockwise OAM radio wave signals, respectively. In the equation (1), "$\varphi$" represents a circumferential angle around the beam axis of an OAM radio wave signal as illustrated in FIG. 1B.

Phase changing section 112:

The phase changing section 112 linearly changes the phase of the OAM radio wave signal according to the equation (1) from the OAM radio wave information setting section 111 over time depending on the OAM mode orders. In other words, the phase changing section 112 changes the phase component "$l\varphi$" in the equation (1) according to the following equation (2):

$$l\varphi(t) = l\varphi + \Delta\omega lt \qquad \ldots (2)$$

where "$\Delta\omega$" represents a phase change coefficient representing a ratio at which the phase of the OAM radio wave has been changed over time and is recognized in advance as an identical value by the transmitter and the receiver. Alternatively, separate means may be used to transmit the value of "$\Delta\omega$" from the transmitter to the receiver before the receiver receives the OAM radio wave. The phase changing section 112 outputs an OAM radio wave signal whose phase has been changed according to the following equation (3):

$$e^{j(l\varphi + \Delta\omega lt)} \qquad \ldots (3)$$

Complex signal generating section 113:

The complex signal generating section 113 generates a complex signal according to the OAM radio wave signal whose phase has been changed as indicated by the equation (3) from the phase changing section 112 and a reference signal. The reference signal is represented by the following equation (4):

$$Ae^{j(\omega t + \theta)} \qquad \ldots (4)$$

The reference signal refers to a signal as a benchmark for radio wave signals to be transmitted. In the equation (4), "A" represents amplitude, "$\omega$" angular frequency, and "$\theta$" initial phase. The complex signal generating section 113 multiplies the OAM radio wave signal whose phase has been changed as indicated by the equation (3) and the reference signal indicated by the equation (4) to generate a complex signal represented by the following equation (5):

$$Ae^{j((\omega + \Delta\omega l)t + l\varphi + \theta)} \qquad \ldots (5)$$

The reference signal may be received from a source outside the transmitter 100 or may be generated in the transmitter 100 by a reference signal generator, not depicted.

Complex signal converting section 121:

The complex signal converting section 121 divides the complex signal as indicated by the equation (5) from the complex signal generating section 113 into a real part and an imaginary part according to the following equations (6):

$$I_i = \text{Real}(Ae^{j((\omega+\Delta\omega l)t+l\varphi+\theta)}) \Big\}$$
$$Q_i = \text{Imag}(Ae^{j((\omega+\Delta\omega l)t+l\varphi+\theta)}) \Big\} \qquad \ldots (6)$$

In other words, the real part of the complex signal represents an I-axis signal of an lth-order (or - lth-order) OAM radio wave, and the imaginary part thereof represents a Q-axis signal of the lth-order (or - lth-order) OAM radio wave.

Wireless processing section 122:

The wireless processing section 122 generates a wireless signal indicated by the following equation (7) from the I-axis signal and Q-axis signal of the OAM radio wave that have been produced by the complex signal converting section 121. In the equation (7), "fc" represents central frequency. The wireless processing section 122 includes a general analog wireless circuit and will not be described in detail below. The wireless signal indicated by the equation (7) is radiated into a space as an OAM radio wave by the circular array antenna 123.

$$I\cos 2\pi f_c t + Q\sin 2\pi f_c t \qquad \ldots (7)$$

Description regarding receiver:

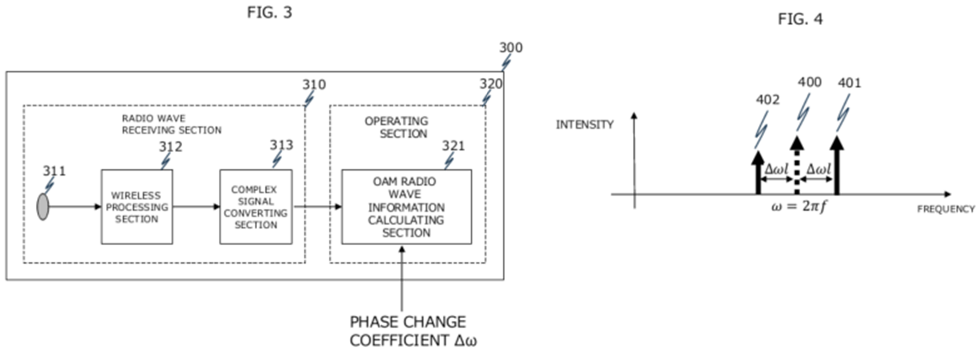

FIG. 3 illustrates in block form a configurational example of a receiver 300 according to the first embodiment. As illustrated in FIG. 3, the receiver 300 includes a radio wave receiving section 310 and an operating section 320. The radio wave receiving section 310 includes an antenna 311, a wireless processing section 312, and a complex signal converting section 313. The operating section 320 includes an OAM radio wave information calculating section 321.

The antenna 311 may be of a unitary structure and includes a patch antenna, for example. The wireless processing section 312 and the complex signal converting section 313 are configured using the SDR technology, as with the radio wave transmitting section 120 of the transmitter 100, and the details of the configuration thereof and the like will be omitted. The OAM radio wave information calculating section 321 performs a processing operation to be described later when the operating section 320 executes a predetermined program.

The antenna 311 receives an OAM radio wave. The OAM radio wave received by the antenna 311 is processed by the wireless processing section 312 to reproduce the OAM radio wave as a wireless signal by a known method. The wireless signal is then converted to a complex signal by the complex signal converting section 313 according to the equation (8) in a case where the OAM radio wave is clockwise and the equation (9) in a case where the OAM radio wave is counterclockwise.

$$S_r(t) = \frac{A}{r} \cdot e^{j(\omega+\Delta\omega l)t} \cdot e^{j(kr+l\varphi+\theta)} \qquad \ldots (8)$$

$$S_r(t) = \frac{A}{r} \cdot e^{j(\omega-\Delta\omega l)t} \cdot e^{j(kr-l\varphi+\theta)} \qquad \ldots (9)$$

where "k" represents wave number and "r" propagation distance.

The OAM radio wave information calculating section 321 analyzes an obtained complex signal and calculates OAM mode orders "±l" set when the OAM radio wave is transmitted by the transmitter 100. Specifically, the OAM radio wave information calculating section 321 performs a fast Fourier transform (FFT) analysis on the obtained complex signal to acquire frequency spectrums as illustrated in FIG. 4. In FIG. 4, the horizontal axis represents frequency, and the vertical axis represents spectrum intensity.

A spectrum 400 represents a spectrum that occurs in a case where the phase changing section 112 of the transmitter 100 has not changed the phase. A spectrum 401 represents a spectrum that occurs in a case where the phase changing section 112 has set "+l," i.e., a counterclockwise OAM mode order "l." A spectrum 402 represents a spectrum that occurs in a case where the phase changing section 112 has set "-l," i.e., a clockwise OAM mode order "l."

The frequency of the spectrum 400 is an angular frequency ($\omega = 2\pi f$). Since the spectrum 401 and the spectrum 402 that are obtained by the FFT analysis are spaced apart from each other by a frequency of "$\Delta\omega l$," it can be determined whether the OAM radio wave is of the OAM mode order "l" and counterclockwise "+" or clockwise "-" by indicating the angular frequency ($\omega$) and the phase change coefficient "$\Delta\omega$" to the transmitter 100 in advance.

By recognizing the OAM mode orders, the receiver 300 is able to acquire various pieces of information included in the received OAM radio wave, making it possible to perform wireless communication or the like. Specific details of the process and configuration for acquiring the various pieces of information will be omitted from description.

Processing sequences:

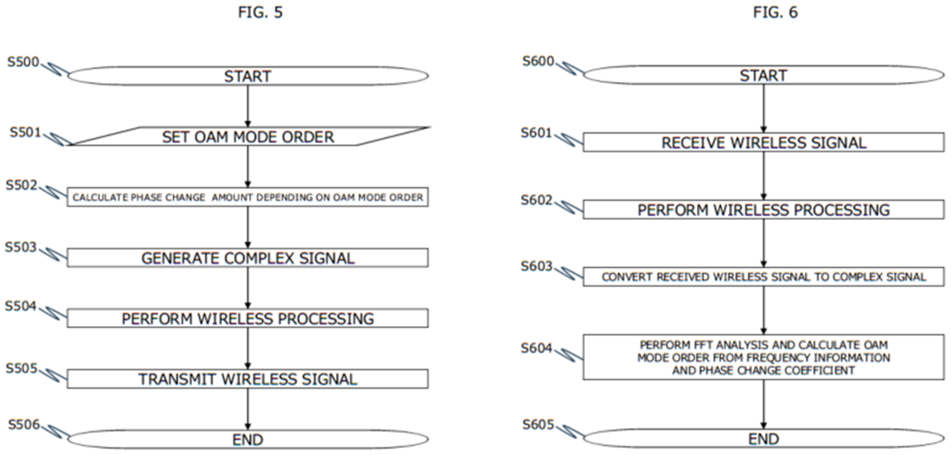

FIG. 5 is a flowchart of a processing sequence of the transmitter 100.

In step S501, the OAM radio wave information setting section 111 accepts the OAM mode orders of an OAM radio wave to be transmitted and generates an OAM radio wave signal according to the OAM mode orders.

In step S502, the phase changing section 112 linearly changes the phase of the OAM radio wave signal over time and calculates a phase change amount.

In step S503, the complex signal generating section 113 generates a complex signal according to the OAM radio wave signal whose phase has been changed and the reference signal.

In step S504, the complex signal converting section 121 and the wireless processing section 122 generate a wireless signal.

In step S505, the circular array antenna 123 transmits the wireless signal as an OAM radio wave.

FIG. 6 is a flowchart of a processing sequence of the receiver 300.

In step S601, the antenna 311 receives the OAM radio wave.

In step S602, the wireless processing section 312 reproduces the received OAM radio wave as a wireless signal.

In step S603, the wireless processing section 312 converts the reproduced wireless signal to a complex signal.

In step S604, the OAM radio wave information calculating section 321 carries out an FFT analysis and calculates OAM mode orders from the frequency information and the phase change coefficient.

According to the present embodiment, as described above, since the transmitter changes the transmission phase according to the OAM mode and the receiver acquires the OAM mode orders from the frequency of the received signal, the receiver may receive a localized portion of the radio wave rather than the overall radio wave that has spread. Consequently, the radio wave transmitting and receiving system can be realized without involving an increase in the size of the apparatus.

Second embodiment:

Inasmuch as radio waves having different OAM modes are independent of each other, they can be multiplexed, so that they can be expected to be applied to efforts to increase the data capacity of information communication. It is effective to generate an OAM radio wave having a geometric structure, hereinafter referred to as a structured radio wave, by combining different OAM modes. In order to receive a structured radio wave and process the received structured radio wave as a significant signal, it is necessary in advance to acquire information regarding the geometric structure of the received structured radio wave, i.e., structured radio wave information.

Meanwhile, a structured radio wave is generated by mixing and controlling radio waves having OAMs. The intensity distribution of a structured radio wave is propagated in the shape of a spreading doughnut beam, as with the first embodiment. The second embodiment is aimed at acquiring structure radio wave information by measuring a localized portion of the structure radio wave.

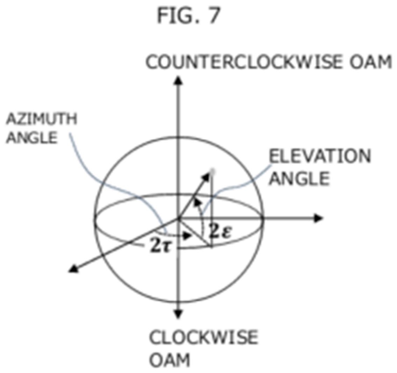

According to the present embodiment, a structured radio wave includes a combination of a counterclockwise, i.e., counterclockwise vortex, OAM and a clockwise, i.e., clockwise vortex, OAM that are of OAM mode orders "l" = $\pm l$. As illustrated in FIG. 7, an azimuth angle $2\tau$ and an elevation angle $2\varepsilon$ of a Poincare sphere are expressed as structured radio wave information. Specifically, the two modes "$\pm l$" of orbital angular momentums are used as a basis, and an azimuth angle and an elevation angle represented by a Poincare sphere whose pole is represented by the basis are referred to as structured radio wave information.

A transmitter and a receiver according to the second embodiment will be described below. Those details of the transmitter and the receiver that are identical to those of the first embodiment will be partially omitted or simplified in the description of the second embodiment.

Description regarding transmitter:

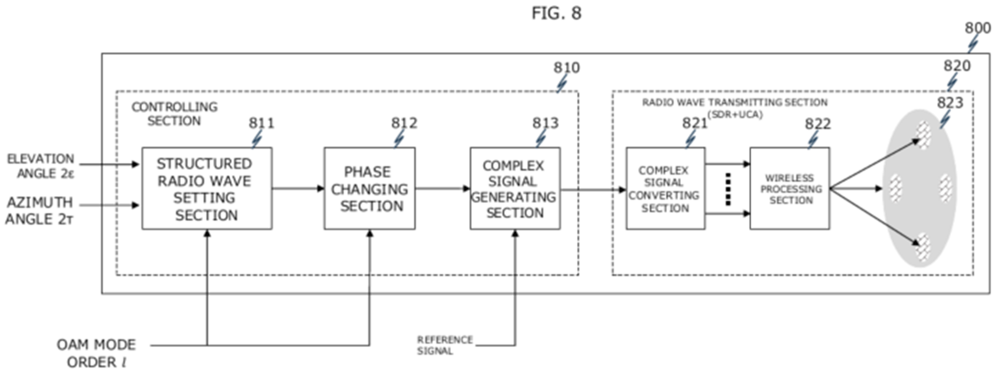

FIG. 8 illustrates in block form a configurational example of a transmitter 800 according to the second embodiment. As illustrated in FIG. 8, the transmitter 800 includes a controlling section 810 and a radio wave transmitting section 820. The controlling section 810 includes a structured radio wave setting section 811 for setting an azimuth angle $2\tau$ and an elevation angle $2\varepsilon$ as structured radio wave information and OAM mode orders "$\pm l$" as OAM radio wave information and generating a structured radio wave signal, a phase changing section 812 for changing the transmission phase, i.e., the angular frequency, of the structured radio wave, and a complex signal generating section 813 for generating a complex signal to be transmitted from the structured radio wave signal that has been changed in phase and a reference signal.

The radio wave transmitting section 820 includes a complex signal converting section 821 for converting the complex signal that has been changed in phase to as many complex signals as the number of antenna elements, a wireless processing section 822 for converting the complex signals to a wireless signal, and a uniform circular array (UCA) antenna 823 having a plurality of antenna elements for outputting the wireless signal as a radio wave. The complex signal converting section 821 and the wireless processing section 822 are configured using the technology referred to as software defined radio (SDR), as with the first embodiment.

Details of the controlling section 810, i.e., the structured radio wave setting section 811, the phase changing section 812, and the complex signal generating section 813, and the radio wave transmitting section 820, i.e., the complex signal converting section 821 and the wireless processing section 822, will be described below. Processing sequences of these sections may be carried out by a processor, i.e., a CPU, of a computer, not depicted, as it executes predetermined programs stored in a storage device, not depicted, or each of the processing sequences may be implemented by a dedicated CPU or piece of hardware, for example.

Structured radio wave setting section 811:

The structured radio wave setting section 811 generates a structured radio wave signal indicated by a matrix according to the following equation (10) according to an azimuth angle $2\tau$ and an elevation angle $2\varepsilon$ of a Poincare sphere where the two modes "$\pm l$" of orbital angular momentums are used as a basis and a pole is represented by the basis.

$$\left[ e^{-j\tau} \cdot \cos\left(\frac{\pi}{4} - \varepsilon\right) \ e^{j\tau} \cdot \sin\left(\frac{\pi}{4} - \varepsilon\right) \right] \qquad \ldots (10)$$

Phase changing section 812:

The phase changing section 812 linearly changes the phase of the structured radio wave signal according to the equation (10) from the structured radio wave setting section 811 over time depending on the OAM mode orders, as indicated by the following equation (11):

$$\left[ e^{-j(\tau - \Delta\omega l t)} \cdot \cos\left(\frac{\pi}{4} - \varepsilon\right) \ e^{j(\tau - \Delta\omega l t)} \cdot \sin\left(\frac{\pi}{4} - \varepsilon\right) \right] \qquad \ldots (11)$$

where "l" represents an OAM mode and "$\Delta\omega$" represents a phase change coefficient indicating a ratio at which to change the phase over time and is recognized in advance as an identical value by the transmitter and the receiver. Alternatively, separate means may transmit these values from the transmitter to the receiver before the receiver receives the OAM radio wave.

Complex signal generating section 813:

The complex signal generating section 813 generates a complex signal according to the structured radio wave signal whose phase has been changed as indicated by the equation (11) from the phase changing section 812 and a reference signal. The reference signal is indicated by the equation (4) as with the first embodiment. The complex signal generating section 813 multiplies the structured radio wave signal whose phase has been changed as indicated by the equation (11) and the reference signal indicated by the equation (4) to generate a complex signal represented by the following equation (12) :

$$\left[ e^{-j(\tau - \Delta\omega l t)} \cdot \cos\left(\frac{\pi}{4} - \varepsilon\right) \ e^{j(\tau - \Delta\omega l t)} \cdot \sin\left(\frac{\pi}{4} - \varepsilon\right) \right] \left( \begin{bmatrix} e^{j\varphi_i} \cdot A e^{j(\omega t + \theta)} \\ e^{-j\varphi_i} \cdot A e^{j(\omega t + \theta)} \end{bmatrix} \right)$$

$$\ldots (12)$$

Complex signal converting section 821:

The complex signal converting section 821 breaks down the complex signal as indicated by the equation (12) from the complex signal generating section 813 into a real part and an imaginary part according to the following equations (13):

$$I_i = \text{Real}\left(\left[e^{-j(\tau-\Delta\omega lt)} \cdot \cos\left(\frac{\pi}{4} - \varepsilon\right) \quad e^{j(\tau-\Delta\omega l)} \cdot \sin\left(\frac{\pi}{4} - \varepsilon\right)\right]\begin{bmatrix} E_L \\ E_R \end{bmatrix}\right)$$

$$= \text{Real}\left(\left[e^{-j(\tau-\Delta\omega l)} \cdot \cos\left(\frac{\pi}{4} - \varepsilon\right) \quad e^{j(\tau-\Delta\omega lt)} \cdot \sin\left(\frac{\pi}{4} - \varepsilon\right)\right]\right.$$

$$\left.\left(\begin{bmatrix} e^{j\varphi_i} \cdot A e^{j(\omega t+\theta)} \\ e^{-j\varphi_i} \cdot A e^{j(\omega t+\theta)} \end{bmatrix}\right)\right)$$

$$Q_i = Imag\left(\left[e^{-j(\tau-\Delta\omega lt)} \cdot \cos\left(\frac{\pi}{4} - \varepsilon\right) \quad e^{j(\tau-\Delta\omega lt)} \cdot \sin\left(\frac{\pi}{4} - \varepsilon\right)\right]\begin{bmatrix} E_L \\ E_R \end{bmatrix}\right)$$

$$= \text{Imag}\left(\left[e^{-j(\tau-\Delta\omega lt)} \cdot \cos\left(\frac{\pi}{4} - \varepsilon\right) \quad e^{j(\tau-\Delta\omega lt)} \cdot \sin\left(\frac{\pi}{4} - \varepsilon\right)\right]\right.$$

$$\left.\left(\begin{bmatrix} e^{j\varphi_i} \cdot A e^{j(\omega t+\theta)} \\ e^{-j\varphi_i} \cdot A e^{j(\omega t+\theta)} \end{bmatrix}\right)\right)$$

$$\varphi_i = \frac{2\pi l}{N} i, i = 0 \sim N - 1$$

$$\cdots (13)$$

where "$\varphi$" represents a circumferential angle around the beam axis of a structured radio wave and N represents the number of antenna elements of the circular array antenna 823.

Wireless processing section 822:

The wireless processing section 822 generates a wireless signal indicated by the equation (7) from the I-axis signal and Q-axis signal of the structured radio wave that have been produced by the complex signal converting section 821. The wireless signal indicated by the equation (7) is radiated into a space as a structured radio wave by the circular array antenna 823.

Description regarding receiver:

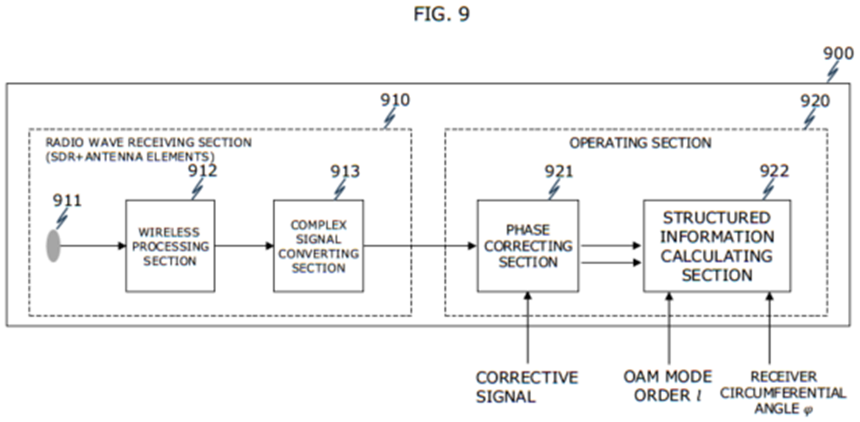

FIG. 9 illustrates in block form a configurational example of a receiver 900 according to the second embodiment. As illustrated in FIG. 9, the receiver 900 includes a radio wave receiving section 910 and an operating section 920. The radio wave receiving section 910 includes an antenna 911, a wireless processing section 912, and a complex signal converting section 913. The operating section 920 includes a phase correcting section 921 and a structured information calculating section 922.

The radio wave receiving section 910 is identical to the radio wave receiving section 310 according to the first embodiment, and the antenna 911, the wireless processing section 912, and the complex signal converting section 913 correspond respectively to the antenna 311, the wireless processing section 312, and the complex signal converting section 313 according to the first embodiment.

As with the first embodiment, the antenna 911 receives a structured radio wave, the wireless processing section 912 reproduces the structured radio wave received by the antenna 911 as a wireless signal, and the complex signal converting section 913 converts the wireless signal to a complex signal.

The phase correcting section 921 changes the frequency of the complex signal from the complex signal converting section 913 with corrective signals indicated by the following equations, i.e., the equation (14) for a clockwise vortex and the equation (15) for a counterclockwise vortex, depending on the OAM mode order:

$$e^{j\Delta\omega lt} \qquad \cdots (14)$$

$$e^{-j\Delta\omega lt} \qquad \cdots (15)$$

Specifically, the phase correcting section 921 changes the frequency according to the "$\Delta\omega$" used in the phase changing section 812 of the transmitter 800. The phase correcting section 921 outputs a complex signal according to the following equation (16) whose phase has been corrected as a signal for detecting a clockwise vortex component and a complex signal according to the following equation (17) whose phase has been corrected as a signal for detecting a counterclockwise vortex component:

$$S_r(t) \cdot e^{j\Delta\omega l t} = \frac{A}{r} \cdot \cos\left(\frac{\pi}{4} - \varepsilon\right) \cdot e^{j(\omega + 2\Delta\omega l)t} \cdot e^{j(kr + l\varphi + \theta - \tau)} + \frac{A}{r} \cdot \sin\left(\frac{\pi}{4} - \varepsilon\right) \cdot$$
$$e^{j\omega t} \cdot e^{j(kr - l\varphi + \theta + \tau)} \qquad \ldots (16)$$

$$S_r(t) \cdot e^{-j\Delta\omega l t} = \frac{A}{r} \cdot \cos\left(\frac{\pi}{4} - \varepsilon\right) \cdot e^{j\omega t} \cdot e^{j(kr + l\varphi + \theta - \tau)} + \frac{A}{r} \cdot \sin\left(\frac{\pi}{4} - \varepsilon\right) \cdot$$
$$e^{j(\omega - 2\Delta\omega l)t} \cdot e^{j(kr - l\varphi + \theta + \tau)} \qquad \ldots (17)$$

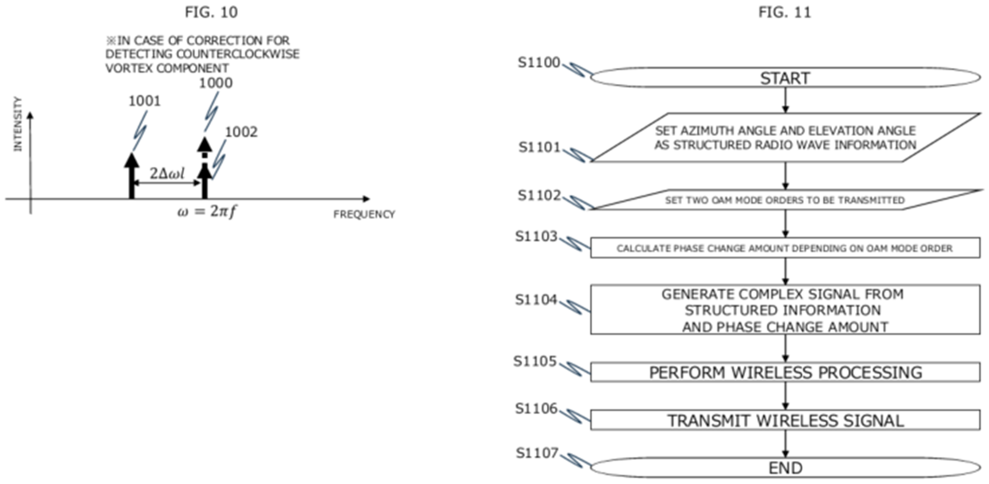

The structured information calculating section 922 calculates structured radio wave information ($\varepsilon,\tau$) from the complex signal that has been corrected in phase. Specifically, the structured information calculating section 922 performs an FFT analysis on the phase-corrected complex signal and acquires frequency spectrums as illustrated in FIG. 10, i.e., frequency spectrums for correction for detecting a counterclockwise vortex component. In FIG. 10, the horizontal axis represents frequency (phase), and the vertical axis spectrum intensity. A spectrum 1000 represents a spectrum that occurs in a case where the phase changing section 812 of the transmitter 800 has not changed the phase. A spectrum 1001 represents the spectrum of a clockwise vortex, and a spectrum 1002 represents the spectrum of a counterclockwise vortex.

The intensities of the structured radio wave, i.e., $A_R$: the clockwise vortex and $A_L$: the counterclockwise vortex, and the phases thereof, i.e., $\varphi_R$: the clockwise vortex and $\varphi_L$: the counterclockwise vortex, are indicated by the following equations, i.e., the equation (18) for clockwise vortex and the equation (19) for counterclockwise vortex:

$$A_R = A/r \cdot \sin\left(\frac{\pi}{4} - \varepsilon\right), \varphi_R = (kr - l\varphi + \theta + \tau) \qquad \ldots (18)$$

$$A_L = \frac{A}{r} \cdot \cos\left(\frac{\pi}{4} - \varepsilon\right), \varphi_L = (kr + l\varphi + \theta - \tau) \qquad \ldots (19)$$

The structured radio wave information ($\varepsilon,\tau$) can be calculated according to the following equations (20):

$$\left. \begin{array}{l} \varepsilon = \frac{\pi}{4} - \mathrm{atan}\left(\frac{A_R}{A_L}\right) \\ \tau = \frac{\varphi_R - \varphi_L}{2} + \Delta\omega l t + l_\varphi \end{array} \right\} \qquad \ldots (20)$$

The structured information calculating section 922 can calculate the elevation angle ($\varepsilon$) of the structured ratio wave information by substituting the intensities and phases of the structured ratio wave, i.e., the clockwise vortex and the counterclockwise vortex, obtained by the above FFT analysis in the equations (20). However, it is necessary to indicate the angular frequency "$\omega$" and the phase change coefficient "$\Delta\omega$" or the OAM mode order "l" to the transmitter 800 in advance. Alternatively, separate means may be used to transmit these pieces of information from the transmitter 800 to the receiver 900 in advance. In order to calculate the azimuth angle ($\tau$) of the structured radio wave information, it is necessary that the circumferential angle ($\varphi$) at the position of a receiving element be already known. Alternatively, the coordinate system may be a system where "$\varphi = 0$."

Processing sequences:

FIG. 11 is a flowchart of a processing sequence of the transmitter 800.

In step S1101, the structured radio wave setting section 811 sets an azimuth angle and an elevation angle as structured radio wave information of a structured radio wave to be transmitted.

In step S1102, the structured radio wave setting section 811 sets two OAM mode orders to be transmitted and generates a structured radio wave signal according to the two OAM mode orders thus set.

In step S1103, the phase changing section 812 linearly changes the phase of the structured radio wave signal over time depending on the OAM mode orders and calculates a phase change amount.

In step S1104, the complex signal generating section 813 generates a complex signal according to the structured radio wave signal that has been changed in phase and a reference signal.

In step S1105, the complex signal converting section 821 and the wireless processing section 822 generate a wireless signal.

In step S1106, the circular array antenna 823 transmits the wireless signal as a structured radio wave.

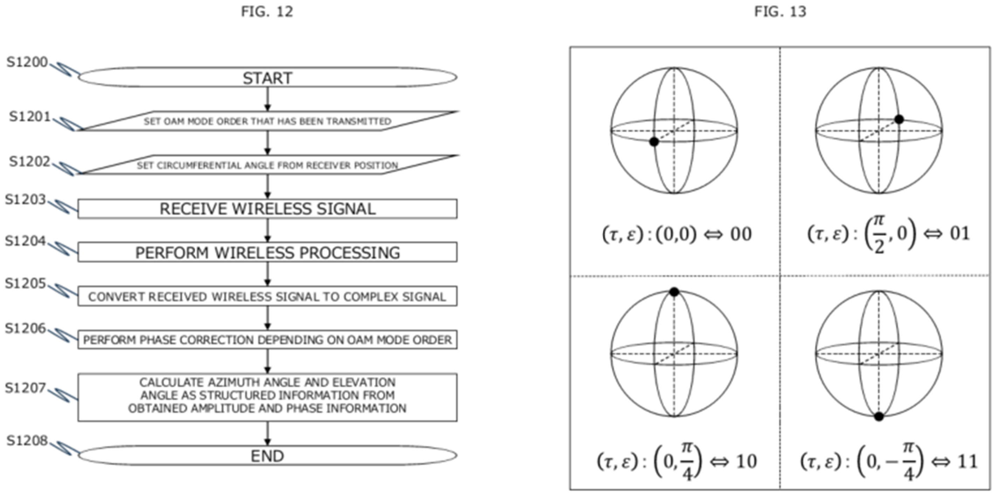

FIG. 12 is a flowchart of a processing sequence of the receiver 900.

In step S1201, the receiver 900 receives the OAM mode orders that have been set by the transmitter 800 for transmitting the structured radio wave from the transmitter 800 and sets the OAM mode orders in the structured information calculating section 922.

In step S1202, the receiver 900 sets the circumferential angle ($\varphi$) at the position of a receiving element of the receiver 900 in the structured information calculating section 922.

In step S1203, the antenna 911 receives the structured ratio wave.

In step S1204, the wireless processing section 912 reproduces the received structured radio wave as a wireless signal.

In step S1205, the complex signal converting section 913 converts the reproduced wireless signal to a complex signal.

In step S1206, the phase correcting section 921 performs phase correction depending on the OAM mode orders.

In step S1207, the structured information calculating section 922 carries out an FFT analysis and calculates an azimuth angle and an elevation angle as structured information from the amplitude and phase that have been obtained.

According to the present embodiment, as described above, since the receiver may receive a localized portion of a structured radio wave rather than the overall radio wave that has spread to acquire geometric information of the structured radio wave, an OAM radio wave, i.e., structured radio wave, transmitting and receiving system can be realized without involving an increase in the size of the receiver.

Third embodiment:

According to the present embodiment, the structured radio wave transmitting and receiving system according to the second embodiment is applied to information communication. According to the present embodiment, specifically, on the basis of the fact that the structured radio wave information ($\tau$, $\varepsilon$) set on the transmitter side can be recovered on the receiver side, the combination of the structured radio wave information ($\tau$, $\varepsilon$) that is associated with bit information to be transmitted is transmitted and received as symbol information to perform information communication.

For example, when either one of 2-bit information [00, 01, 10, 11] is to be transmitted from the transmitter, a structured radio wave including symbol information where the combination of the structured radio wave information ($\tau$, $\varepsilon$) that is associated with (0, 0), ($\pi/2$, 0), (0, $\pi/4$), (0, -$\pi/4$), as illustrated in FIG. 13, is transmitted. If the receiver obtains (0, $\pi/4$) associated with the combination of the structured radio wave information ($\tau$, $\varepsilon$), then it can be recognized that [10] has been transmitted as bit information.

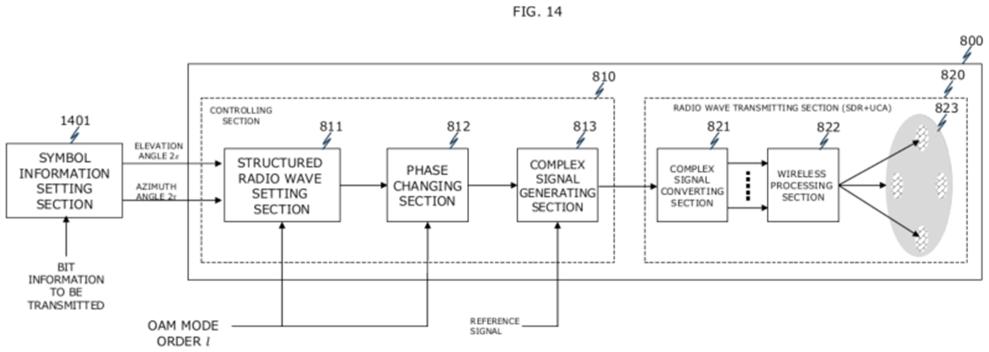

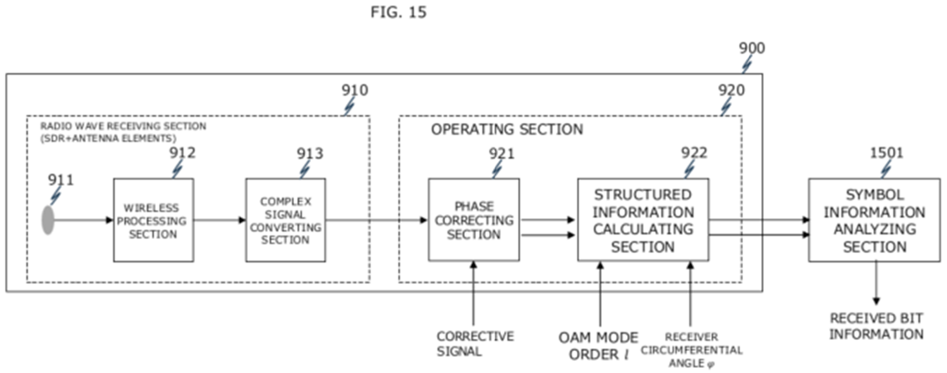

Specifically, the transmitter side includes a symbol information setting section 1401 provided as a stage preceding the transmitter 800 (see FIG. 8) according to the second embodiment, as illustrated in FIG. 14. The symbol information setting section 1401 converts bit information to be transmitted to structured radio wave information ($\tau$, $\varepsilon$) according to the rule of association as illustrated in FIG. 13, for example, and inputs the structured radio wave information ($\tau$, $\varepsilon$) as an elevation angle ($2\varepsilon$) and an azimuth angle ($2\varepsilon$) to the structured radio wave setting section 811. The receiver side includes a symbol information analyzing section 1501 provided as a stage following the receiver 900 according to the second embodiment, as illustrated in FIG. 15. The symbol information analyzing section 1501 converts the elevation angle ($\varepsilon$) and the azimuth angle ($\tau$) output from the structured information calculating section 922 to bit information according to the rule of association, similarly, as illustrated in FIG. 13. It is thus possible to obtain the transmitted bit information as the received bit information.

As described above in the second embodiment, in order to calculate the azimuth angle ($\tau$) of the structured radio wave information on the receiver side, it is necessary that the circumferential angle ($\varphi$) at the position of a receiving element be already known. In other words, in a case where the circumferential angle ($\varphi$) is unknown in the calculation of the azimuth angle ($\tau$) according to the equations (20), then the azimuth angle ($\tau$) becomes an offset value, i.e., a value with "+l$\varphi$," and the value of the transmitted azimuth angle ($\tau$) itself cannot be calculated to a nicety.

Instead of calculating the value of the azimuth angle ($\tau$) itself, the receiver side may detect a change ($\Delta\tau$) in the azimuth angle ($\tau$) and associate ($\Delta\tau$, $\varepsilon$) with the bit information. In other words, by calculating the change, i.e., the difference, in the azimuth angle ($\tau$) including the offset, the receiver side can cancel the offset and hence can recover the transmitted bit information even if the circumferential angle ($\varphi$) is unknown on the receiver side.

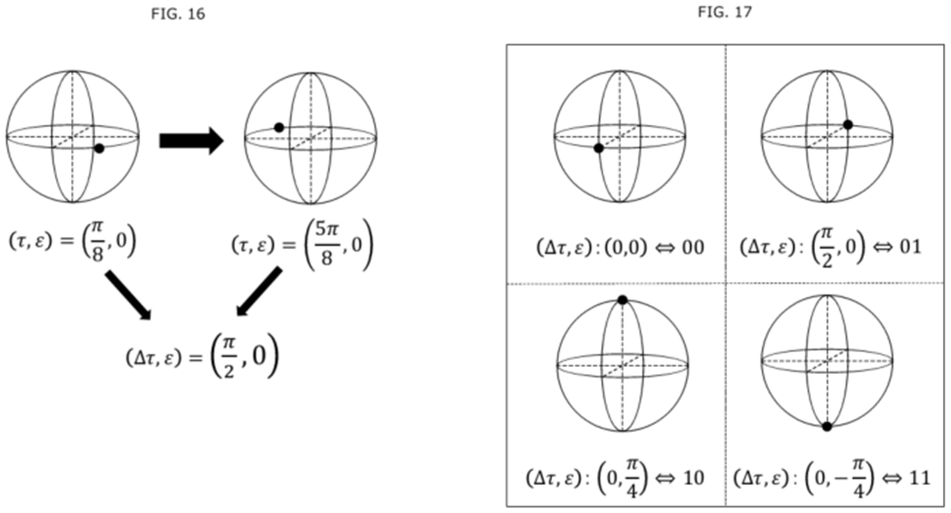

For example, in a case where the transmitter side changes the structured radio wave information ($\tau$, $\varepsilon$) from ($\pi/8$, 0) to ($5\pi/8$, 0), as illustrated in FIG. 16, when the receiver side calculates the difference ($\Delta\tau$, $\varepsilon$) between them, the offset is canceled, and ($\pi/2$, 0) is obtained. At this time, if ($\Delta\tau$, $\varepsilon$) and bit information are associated with each other as illustrated in FIG. 17, for example, then the receiver side is able to detect that [01] has been transmitted as bit information.

Also, according to the present embodiment, the symbol information setting section 1401 and the symbol information analyzing section 1501 illustrated in FIGS. 14 and 15, respectively, may be provided to convert a transmitted signal to symbol information and recover the transmitted signal from the received symbol information.

According to the present embodiment, as described above, inasmuch as symbol information where the combination of the structured radio wave information ($\tau$, $\varepsilon$) that is associated with bit information to be transmitted is transmitted and received, it is possible to apply the radio wave transmitting and receiving system to information communication.

Fourth embodiment:

As described above with regard to the second and third embodiments, in order to calculate the azimuth angle ($\tau$) of the structured radio wave information on the receiver side, it is necessary that the circumferential angle ($\varphi$) at the position of a receiving element be already known and to that end it is necessary to detect the axial direction of the beam axis on the receiver side. However, as the distance between the transmitter and the receiver becomes large, it is not necessarily be practically easy for the receiver to detect the axial direction of the beam axis. In view of this, according to the present embodiment, a configuration for the receiver to detect the axial direction of the beam axis will be described below as another application of the second and

third embodiments.

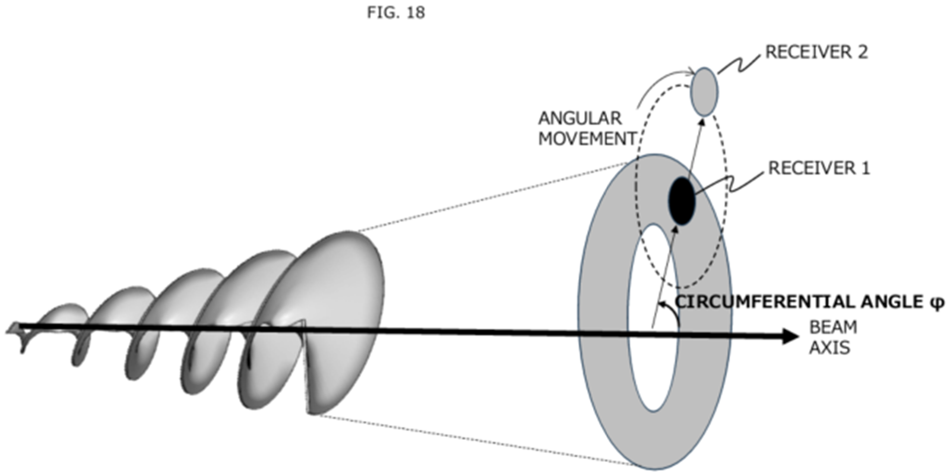

As indicated by the equations (20), the azimuth angle ($\tau$) depends on the circumferential angle ($\varphi$). In view of this, as illustrated in FIG. 18, two receivers, i.e., a receiver 1 and a receiver 2, are provided, and receive a structured radio wave while the receiver 2 is revolving around the receiver 1. Each of the receiver 1 and the receiver 2 recovers the azimuth angle ($\tau$) and the elevation angle ($\varepsilon$) of the received structure radio wave. In the positional relation between the receiver 1 and the receiver 2 at a time when the recovered information ($\tau$, $\varepsilon$) at the receiver 1 and the receiver 2 agree with each other, their circumferential angles ($\varphi$) agree with each other, making it possible to estimate that the beam axis is present on a straight line that interconnects the receiver 1 and the receiver 2.

Rather than revolving the receiver 2 around the receiver 1, a plurality of receivers 2 may be disposed around the receiver 1, or the receiver 2 may be moved in a plurality of directions near the receiver 1.

Alternatively, the receiver 1 and the receiver 2 may include respective devices for detecting their own positions, the positional information of the receiver 2 and the structured radio wave information calculated by the receiver 2 may be transmitted to the receiver 1, so that the operating section 920 of the receiver 1, or the like, can perform the calculations described above. Further alternatively, a separate operating device may receive the calculated structured radio wave information from the receiver 1 and the receiver 2 and perform the above calculations. Still further alternatively, a moving device for moving the receiver 2, or the like, may be provided, and the positional information of the receiver 2 may be acquired from the moving device.

With the configuration according to the present embodiment, the circumferential angle of the receiver 1 can be detected by making initial settings and initial adjustments on the receiver 1 in combination with the receiver 2 at a time when the receiver 1 is installed, for example. When the receiver 1 is subsequently in actual operation, the azimuth angle ($\tau$) can be detected on an absolute coordinate system rather than as a change amount without using the receiver 2.

According to the present embodiment, as described above, the axial direction of the beam axis can be estimated on the receiver side.

The details according to the above embodiments may be changed or modified without departing from the scope of the present invention. For example, some components of an embodiment may be realized by other processes insofar as the functions of the components remain substantially effective as intended, and may be added to other embodiments or replaced with components according to other embodiments.

**Claims**

1. A radio wave generating apparatus comprising:

    a controlling section; and
    a radio wave transmitting section, wherein
    the controlling section includes

        an OAM radio wave information setting section for generating a transmission radio wave signal according to an OAM mode order,
        a phase changing section for linearly changing a phase of the transmission radio wave signal over time depending on the OAM mode order, and
        a complex signal generating section for generating a complex signal from the transmission radio wave signal that has been changed in phase by the phase changing section and a reference signal, and

the radio wave transmitting section includes

a complex signal converting section for breaking down a signal component of the complex signal into a real part and an imaginary part,
a wireless processing section for generating a wireless signal from the signal component of the complex signal that has been broken down into the real part and the imaginary part, and
an array antenna for transmitting the wireless signal as an OAM radio wave.

2. A radio wave detecting apparatus comprising:

a radio wave receiving section; and
an operating section, wherein
the radio wave receiving section includes

an antenna for receiving an OAM radio wave,
a wireless processing section for reproducing the received OAM radio wave as a wireless signal, and
a complex signal converting section for converting the reproduced wireless signal to a complex signal, and

the operating section includes
an OAM radio wave information calculating section for calculating an OAM mode order of the OAM radio wave from a frequency characteristic of the complex signal and a phase change coefficient representing a ratio at which a phase of the OAM radio wave has been changed depending on the OAM mode order at a time when the OAM radio wave has been transmitted.

3. A radio wave transmitting and receiving system comprising:

the radio wave generating apparatus according to claim 1; and
the radio wave detecting apparatus according to claim 2.

4. The radio wave transmitting and receiving system according to claim 3, wherein
the radio wave detecting apparatus receives the phase change coefficient from the radio wave generating apparatus.

5. A radio wave generating apparatus comprising:

a controlling section; and
a radio wave transmitting section, wherein
the controlling section includes

a structured radio wave setting section for generating a transmission radio wave signal according to an azimuth angle and an elevation angle that are represented by a sphere where two OAM mode orders are used as a basis and a pole is represented by the basis,
a phase changing section for linearly changing a phase of the transmission radio wave signal over time depending on the OAM mode orders, and
a complex signal generating section for generating a complex signal from the transmission radio wave signal that has been changed in phase by the phase changing section and a reference signal, and

the radio wave transmitting section includes

a complex signal converting section for breaking down a signal component of the complex signal into a real part and an imaginary part;
a wireless processing section for generating a wireless signal from the signal component of the complex signal that has been broken down into the real part and the imaginary part, and
an array antenna for transmitting the wireless signal as an OAM radio wave.

6. A radio wave detecting apparatus comprising:

a radio wave receiving section; and
an operating section, wherein
the radio wave receiving section includes

an antenna for receiving an OAM radio wave generated according to an azimuth angle and an elevation angle that are represented by a sphere where two OAM mode orders are used as a basis and a pole is represented by the basis,
a wireless processing section for reproducing the received OAM radio wave as a wireless signal, and
a complex signal converting section for converting the reproduced wireless signal to a complex signal, and

the operating section includes

a phase correcting section for changing a frequency of the complex signal depending on the OAM mode orders, and
a structured information calculating section for calculating the azimuth angle and the elevation angle from a phase and an intensity of the complex signal that has been changed in phase.

7. The radio wave detecting apparatus according to claim 6, wherein
the phase correcting section determines an amount by which to change the frequency according to a phase change coefficient representing a ratio at which the phase of the OAM radio wave has been changed depending on the OAM mode orders at a time when the OAM radio wave has been transmitted.

8. A radio wave transmitting and receiving system comprising:

the radio wave generating apparatus according to claim 5; and
the radio wave detecting apparatus according to claim 7.

9. The radio wave transmitting and receiving system according to claim 8, wherein
the radio wave detecting apparatus receives the phase change coefficient or the OAM mode orders from the radio wave generating apparatus.

10. The radio wave transmitting and receiving system according to claim 8, wherein

the radio wave generating apparatus includes a symbol information setting section for inputting symbol information where a combination of the azimuth angle and the elevation angle is associated with bit information to the structured radio wave setting section, and
the radio wave detecting apparatus includes a symbol information analyzing section for acquiring the bit information from the combination of the azimuth angle and the elevation angle output from the structured information calculating section.

11. The radio wave transmitting and receiving system according to claim 10, wherein
the symbol information setting section and the symbol information analyzing section use a change amount in the azimuth angle instead of the azimuth angle.

12. The radio wave transmitting and receiving system according to claim 8, further comprising:

a second radio wave detecting apparatus for receiving the OAM radio wave while positionally changing around the radio wave detecting apparatus, wherein
a direction of a beam axis of the OAM radio wave transmitted from the radio wave generating apparatus is estimated from a positional relation between the radio wave detecting apparatus and the second radio wave detecting apparatus at a time when the azimuth angles and the elevation angles calculated by the radio wave detecting apparatus and the second radio wave detecting apparatus agree with each other.

FIG. 1A

FIG. 1B

φ: CIRCUMFERENTIAL ANGLE

φ:周方向角

BEAM AXIS

OAM RADIO WAVE

FIG. 2A

DOUGHNUT BEAM

PART OF RADIO WAVE IS DETECTED TO ACQUIRE OAM RADIO WAVE INFORMATION

INCREASING BEAM WIDTH

PROPAGATION DISTANCE

RECEIVER

PERCEPTIVE IMAGE OF OAM RADIO WAVE PROPAGATION

FIG. 2B

(a) CONVENTIONAL ART
(OVERALL DETECTION)

(b) PRESENT INVENTION (LOCAL
DETECTION)

PERCEPTIVE IMAGE
OF RECEIVER

FIG. 3

RADIO WAVE
RECEIVING SECTION

WIRELESS
PROCESSING
SECTION

COMPLEX
SIGNAL
CONVERTING
SECTION

OPERATING
SECTION

OAM RADIO
WAVE
INFORMATION
CALCULATING
SECTION

PHASE CHANGE
COEFFICIENT Δω

FIG. 4

INTENSITY

$\Delta \omega l$  $\Delta \omega l$

$\omega = 2\pi f$

FREQUENCY

## FIG. 5

- S500 — START
- S501 — SET OAM MODE ORDER
- S502 — CALCULATE PHASE CHANGE AMOUNT DEPENDING ON OAM MODE ORDER
- S503 — GENERATE COMPLEX SIGNAL
- S504 — PERFORM WIRELESS PROCESSING
- S505 — TRANSMIT WIRELESS SIGNAL
- S506 — END

## FIG. 6

- S600 — START
- S601 — RECEIVE WIRELESS SIGNAL
- S602 — PERFORM WIRELESS PROCESSING
- S603 — CONVERT RECEIVED WIRELESS SIGNAL TO COMPLEX SIGNAL
- S604 — PERFORM FFT ANALYSIS AND CALCULATE OAM MODE ORDER FROM FREQUENCY INFORMATION AND PHASE CHANGE COEFFICIENT
- S605 — END

FIG. 7

FIG. 8

EP 4 749 939 A1

FIG. 9

FIG. 11

START
S1100

SET AZIMUTH ANGLE AND ELEVATION ANGLE AS STRUCTURED RADIO WAVE INFORMATION
S1101

SET TWO OAM MODE ORDERS TO BE TRANSMITTED
S1102

CALCULATE PHASE CHANGE AMOUNT DEPENDING ON OAM MODE ORDER
S1103

GENERATE COMPLEX SIGNAL FROM STRUCTURED INFORMATION AND PHASE CHANGE AMOUNT
S1104

PERFORM WIRELESS PROCESSING
S1105

TRANSMIT WIRELESS SIGNAL
S1106

END
S1107

FIG. 10

※IN CASE OF CORRECTION FOR DETECTING COUNTERCLOCKWISE VORTEX COMPONENT

1000

1001

1002

$2\Delta\omega l$

$\omega = 2\pi f$

FREQUENCY

INTENSITY

FIG. 12

S1200 — START

S1201 — SET OAM MODE ORDER THAT HAS BEEN TRANSMITTED

S1202 — SET CIRCUMFERENTIAL ANGLE FROM RECEIVER POSITION

S1203 — RECEIVE WIRELESS SIGNAL

S1204 — PERFORM WIRELESS PROCESSING

S1205 — CONVERT RECEIVED WIRELESS SIGNAL TO COMPLEX SIGNAL

S1206 — PERFORM PHASE CORRECTION DEPENDING ON OAM MODE ORDER

S1207 — CALCULATE AZIMUTH ANGLE AND ELEVATION ANGLE AS STRUCTURED INFORMATION FROM OBTAINED AMPLITUDE AND PHASE INFORMATION

S1208 — END

FIG. 13

$(\tau, \varepsilon) : (0,0) \Leftrightarrow 00$

$(\tau, \varepsilon) : \left(\frac{\pi}{2}, 0\right) \Leftrightarrow 01$

$(\tau, \varepsilon) : \left(0, \frac{\pi}{4}\right) \Leftrightarrow 10$

$(\tau, \varepsilon) : \left(0, -\frac{\pi}{4}\right) \Leftrightarrow 11$

EP 4 749 939 A1

FIG. 14

800

820

823

Radio Wave Transmitting Section (SDR+UCA)

822 — WIRELESS PROCESSING SECTION

821 — COMPLEX SIGNAL CONVERTING SECTION

810

CONTROLLING SECTION

811 — STRUCTURED RADIO WAVE SETTING SECTION

812 — PHASE CHANGING SECTION

813 — COMPLEX SIGNAL GENERATING SECTION

REFERENCE SIGNAL

OAM MODE ORDER $l$

1401 — SYMBOL INFORMATION SETTING SECTION

ELEVATION ANGLE $2_R$

AZIMUTH ANGLE $2_T$

BIT INFORMATION TO BE TRANSMITTED

FIG. 15

FIG. 16

$(\tau, \varepsilon) = \left(\dfrac{\pi}{8}, 0\right)$   $(\tau, \varepsilon) = \left(\dfrac{5\pi}{8}, 0\right)$

$(\Delta\tau, \varepsilon) = \left(\dfrac{\pi}{2}, 0\right)$

FIG. 17

$(\Delta\tau, \varepsilon) : (0,0) \Leftrightarrow 00$   $(\Delta\tau, \varepsilon) : \left(\dfrac{\pi}{2}, 0\right) \Leftrightarrow 01$

$(\Delta\tau, \varepsilon) : \left(0, \dfrac{\pi}{4}\right) \Leftrightarrow 10$   $(\Delta\tau, \varepsilon) : \left(0, -\dfrac{\pi}{4}\right) \Leftrightarrow 11$

FIG. 18

RECEIVER 2

ANGULAR MOVEMENT

RECEIVER 1

CIRCUMFERENTIAL ANGLE φ

BEAM AXIS

EP 4 749 939 A1

Europäisches
Patentamt

European
Patent Office

Office européen
des brevets

## EUROPEAN SEARCH REPORT

**Application Number**

EP 25 21 7119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/170574 A1 (SACCO BRUNO [IT] ET AL) 15 June 2017 (2017-06-15) | 1,5 | INV.<br>H04B7/04 |
| A | * paragraphs [0022], [0028], [0031] *<br>* figure 1 * | 2-4,6-12 | |

-----

**TECHNICAL FIELDS**
**SEARCHED      (IPC)**

H04B

The present search report has been drawn up for all claims

| Place of search | Date of completion of the search | Examiner |
|---|---|---|
| Munich | 1 April 2026 | Franz, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 7119

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2026

| Patent document cited in search report | Publication date | Patent family member(s) | | Publication date |
|---|---|---|---|---|
| US 2017170574 A1 | 15-06-2017 | CN | 106233659 A | 14-12-2016 |
| | | EP | 3132558 A1 | 22-02-2017 |
| | | JP | 7056857 B2 | 19-04-2022 |
| | | JP | 2017515337 A | 08-06-2017 |
| | | JP | 2020039129 A | 12-03-2020 |
| | | KR | 20160146850 A | 21-12-2016 |
| | | US | 2017170574 A1 | 15-06-2017 |
| | | WO | 2015159264 A1 | 22-10-2015 |

EPO FORM P0459

For more details about this annex : see Official Journal of the European Patent Office, No. 12/82

**REFERENCES CITED IN THE DESCRIPTION**

**Patent documents cited in the description**

- JP 2018067791 A